# EUROPÄISCHE PATENTANMELDUNG

(11) **EP 3 663 736 A1**
(43) Veröffentlichungstag der Anmeldung: **10.06.2020**
(21) Anmeldenummer: 19208474.7
(22) Anmeldetag: 12.11.2019
(51) Int. Cl.: G01L 3/10

(54) **DREHMOMENTERFASSUNGSEINRICHTUNG UND ARBEITSVORRICHTUNG**

(30) Priorität: 07.12.2018 DE 102018221206
(71) Anmelder: Robert Bosch GmbH, 70442 Stuttgart (DE)
(72) Erfinder: Doelling, Rolando, 72379 Hechingen (DE)

(57) **Zusammenfassung**

Die vorliegende Erfindung betrifft eine Drehmomenterfassungseinrichtung (100) zur aktiven Erfassung eines auf eine Welle (15) und insbesondere auf eine Kurbelwelle (15) einer mit Muskelkraft und/oder oder mit Motorkraft antreibbaren Arbeitsvorrichtung, insbesondere eines Fahrzeugs (1), entlang einer Rotationsachse (X) wirkenden Drehmomentes mit einer Erregereinheit (20), welche zur Beaufschlagung der Welle (15) mit einem zeitlich veränderlichen Magnetfeld ausgebildet ist, und einer ersten Sensoreinheit (30) und einer zweiten Sensoreinheit (40), welche zur Erfassung eines von der Welle (15) getragenen Magnetfeldes ausgebildet sind, wobei die erste und die zweite Sensoreinheit (40) jeweils mehrere Empfangsspulen (31-1, 41-1) aufweisen, in Bezug aufeinander mit ihren Empfangsspulen (31-1, 41-1) dieselbe Orientierung aufweisen, sodass sie im montierten Zustand und im Betrieb in Bezug auf die Welle (15) und/oder in Bezug auf die Rotationsachse (X) gleich orientiert sind und, insbesondere bei ansonsten gleichem Aufbau, unterschiedliche elektrische Verschaltungen für ihre jeweiligen mehreren Empfangsspulen (31-1, 41-1) aufweisen.

## Beschreibung

### Stand der Technik

Die vorliegende Erfindung betrifft eine Drehmomenterfassungseinrichtung und eine Arbeitsvorrichtung, insbesondere ein Fahrzeug. Die vorliegende Erfindung betrifft insbesondere eine Drehmomenterfassungseinrichtung zur aktiven Erfassung eines auf eine Welle und insbesondere auf eine Kurbelwelle einer mit Muskelkraft und/oder mit Motorkraft antreibbaren Arbeitsvorrichtung, insbesondere eines Fahrzeuges, entlang einer Rotationsachse wirkenden Drehmomentes und eine mit Muskelkraft und/oder mit Motorkraft antreibbare Arbeitsvorrichtung, ein Fahrzeug, ein Fahrrad, Elektrofahrrad, ein eBike, ein Pedelec oder dergleichen.

Bei der Überwachung und/oder Steuerung von Antriebsvorrichtungen, zum Beispiel im Bereich der Fahrzeugtechnik, ist es oft wünschenswert, das auf eine Welle einer Antriebseinheit wirkende Drehmoment zu erfassen.

Dazu werden herkömmlicherweise Drehmomenterfassungseinrichtungen eingesetzt, die mit den mechanischen Verspannungen in der Welle im Zusammenhang stehende Effekte ausnutzen, um so auf den Wert eines auf die Achse wirkenden Drehmomentes schließen zu können. Dabei können Materialien eingesetzt werden, die einen von den mechanischen Belastungen abhängigen piezoelektrischen Effekt oder einen inversen magnetostriktiven Effekt zeigen. Der Wert des Drehmoments steht dabei jeweils im Zusammenhang z.B. mit einer passiv abgreifbaren elektrischen Spannung oder mit einem messbaren magnetischen Feld und deren Änderungen.

Nachteilig ist dabei, dass einerseits ausschließlich auf die elektrischen oder magnetischen Größen zurückgegriffen wird, die das mit dem Drehmoment beaufschlagte Material selbst bereitstellt. Andererseits ist ein derartiges Vorgehen auf Grund von Störeinflüssen im thermischen Bereich, zum Beispiel im Sinne einer Temperaturdrift, oder im mechanischen Bereich, z.B. im Sinne von auftretenden Vibrationen oder Verformungen der Antriebskomponenten, mit entsprechenden Messfehlern behaftet. Diese Messfehler bleiben oft unentdeckt und können zu Fehlinterpretationen bei der Bewertung der erfassten Werte des vermeintlich auftretenden Drehmomentes führen.

### Offenbarung der Erfindung

Die erfindungsgemäße Drehmomenterfassungseinrichtung mit den Merkmalen des unabhängigen Anspruches 1 weist demgegenüber den Vorteil auf, dass ohne besondere materielle Vorkehrungen im Bereich der zu untersuchenden Welle auf die Welle einwirkende Drehmomente mit einem hohen Maß an Zuverlässigkeit und Genauigkeit ermittelt werden können. Dies wird erfindungsgemäß mit den Merkmalen des unabhängigen Anspruches 1 dadurch erreicht, dass eine Drehmomenterfassungseinrichtung zur aktiven Erfassung eines auf eine ruhende oder drehende Welle und insbesondere auf eine ruhende oder drehende Kurbelwelle einer mit Muskelkraft und/oder oder mit Motorkraft antreibbaren Arbeitsvorrichtung, insbesondere eines Fahrzeugs, entlang einer Rotationsachse X wirkenden Drehmomentes geschaffen wird mit einer Erregereinheit, welche zur Beaufschlagung der Welle mit einem zeitlich veränderlichen Magnetfeld ausgebildet ist, und einer ersten Sensoreinheit und einer zweiten Sensoreinheit, welche zur Erfassung eines von der Welle getragenen Magnetfeldes ausgebildet sind, wobei die erste Sensoreinheit und die zweite Sensoreinheit (i) jeweils mehrere Empfangsspulen aufweisen, (ii) in Bezug aufeinander mit ihren Empfangsspulen dieselbe Orientierung aufweisen, so dass sie im montierten Zustand und im Betrieb in Bezug auf die Welle und/oder in Bezug auf die Rotationsachse gleich orientiert sind und, insbesondere bei ansonsten gleichem Aufbau, (iii) unterschiedliche elektrische Verschaltungen für ihre jeweiligen mehreren Empfangsspulen aufweisen.

Durch die erfindungsgemäßen Maßnahmen und insbesondere durch die voneinander abweichenden elektrischen Verschaltungen der Mehrzahl der Empfangsspulen der ersten und zweiten Sensoreinheiten erfassen diese ein von der Welle getragenes Magnetfeld, welches durch die Erregereinheit durch Beaufschlagung mit einem zeitlich veränderlichen Magnetfeld und insbesondere mit einem magnetischen Wechselfeld angeregt wird, in unterschiedlicher Art und Weise und insbesondere derart, dass bereits auf der Ebene der Signalerfassung durch die Empfangsspulen Störsignale kompensiert werden. Dies erfolgt zum Beispiel nach Art einer magnetischen Kompensation und/oder magnetischen Schubkopplung. Auf diese Weise werden praktisch schon auf der "magnetischen Ebene" Störsignale zumindest teilweise bei der Entstehung kompensiert.

Durch eine entsprechende zusätzliche Auswertung, zum Beispiel durch eine Differenzbildung der erfassten Signale, können dann die von der Drehmomentbeaufschlagung stammenden Effekte im Sinne der Signalkomponenten im erfassten Magnetfeld mit einem höheren Maß an Zuverlässigkeit analysiert und isoliert von den Signalkomponenten der ersten und zweiten Sensoreinheit ausgewertet werden, die von Störeinflüssen herrühren und welche von der Verschaltung der Empfangsspulen der Sensoreinheiten unabhängig oder stärker unabhängig sind als die mit dem beaufschlagten Drehmoment im Zusammenhang stehenden Signalkomponenten.

In der Praxis bedeutet dies, dass beide Sensoreinheiten dieselbe mit einem Drehmoment beaufschlagte Welle vermessen, jedoch mit unterschiedlicher elektrischer Verschaltung der den Sensoreinheiten zu Grunde liegenden Empfangsspulen. Dabei kann eine Sensoreinheit so eingerichtet sein, dass sie das mit der Drehmomentbeaufschlagung im Zusammenhang stehende Magnetfeld mit besonders hoher Empfindlichkeit erfasst, wogegen die zweite Sensoreinheit quasi als Kompensationssensor dient und mit einer elektrischen Verschaltung der Empfangsspulen derart eingerichtet ist, dass die Störeinflüsse zwar unverändert erfasst, aber von den von der Drehmomentbeaufschlagung stammenden Effekten vergleichsweise gering beeinflusst werden.

Im Idealfall ist die unterschiedlich ausgestaltete elektrische Verschaltung der Mehrzahl der Empfangsspulen der Sensoreinheiten so ausgebildet, dass eine der Sensoreinheiten die empfangenen Signalkomponenten, die von Störungen stammen, bei der Entstehung in der anderen Sensoreinheit bereits bei Signalentstehung kompensiert, so dass die andere Sensoreinheit das dem Drehmoment zu Grunde liegende Signal mit verminderter oder vollständig kompensierter Störung erfasst, so dass aus der - ggf. gewichteten - Differenz der Signale das Drehmoment besonders genau ermittelbar ist.

Aus diesem Grund ist es auch besonders vorteilhaft, dass die jeweiligen Empfangsspulen der Sensoreinheiten sich durch magnetische Kopplung einander beeinflussen, so dass ein Effekt in einer Empfangsspule einer Sensoreinheit aus einem Störeinfluss über die magnetische Kopplung an eine zugeordnete Spule dort in einen den Störeinfluss kompensierenden Effekt gewandelt wird.

Es werden erfindungsgemäß insbesondere Störungen eliminiert, die im Zusammenhang stehen mit externen Magnetfeldern, z.B. dem Erdfeld und/oder dem Umfeld, der Drehung der Welle, z.B. auf Grund der nicht idealen Wellengeometrie, Vibrationen, Temperaturänderungen und dergleichen.

Die Unteransprüche zeigen bevorzugte Weiterbildungen der Erfindung.

Es ist von besonderem Vorteil im Hinblick auf die Messempfindlichkeit, wenn die jeweilige Welle keine eigene Magnetisierung trägt oder die Magnetisierung eine stärke aufweist, welche in der Anwendung mit ihrem erzeugten Magnetfeld geringer ist als die Stärke des von der Erregereinheit aufzuprägenden oder zu beaufschlagenden Magnetfeldes und der damit im Zusammenhang stehenden aufgeprägten oder beaufschlagten Magnetisierung.

Bei einer vorteilhaften Ausgestaltungsform der erfindungsgemäßen Drehmomenterfassungseinrichtung weist die Erregereinheit für die Sensoreinheiten einen gemeinsamen Erreger auf. Dadurch lässt sich die Anzahl der zu verbauenden Komponenten mit einer entsprechenden Bauraumeinsparung verringern.

Der gemeinsame Erreger kann insbesondere aus oder mit einer Magnetspule, mit einem Kern, mit oder aus einem ferromagnetischen Material, und/oder mit einer Position in der Mitte oder zentral zur Anordnung der mehreren Empfangsspulen der ersten Sensoreinheit und/oder der zweiten Sensoreinheit ausgebildet sein.

Obwohl grundsätzlich hinsichtlich Aufbau und Funktion die Empfangsspulen der ersten und zweiten Sensoreinheiten gleich aufgebaut sein können, kann es von besonderem Vorteil sein, wenn gemäß einem anderen Ausführungsbeispiel der vorliegenden Erfindung Empfangsspulen der ersten Sensoreinheit als Mess- und/oder Sensierungsspulen und/oder Empfangsspulen der zweiten Sensoreinheit als Kompensationsspulen ausgebildet sind. Diese Maßnahmen betreffen insbesondere die Ausgestaltung der Empfangsspulen im Hinblick auf die Aufnahme oder Erfassung von Störungen und das jeweilige Kompensationsvermögen.

Ein besonders hohes Maß an Symmetrie des Aufbaus der Drehmomenterfassungseinrichtung mit einer entsprechenden Steigerung des Kombinationsvermögens im Hinblick auf Störsignale stellt sich gemäß einer anderen vorteilhaften Weiterbildung der Erfindung dadurch ein, dass die erste Sensoreinheit und die zweite Sensoreinheit mit derselben Anzahl von Empfangsspulen ausgebildet sind.

Obwohl grundsätzlich beliebige Anzahlen denkbar sind, ergibt sich eine besonders einfache, aber gleichwohl zuverlässige Anordnung dann, wenn jeweils vier Empfangsspulen vorgesehen werden.

Zusätzlich oder alternativ ist es denkbar, dass die jeweiligen Empfangsspulen und ihre Anordnung mit einer 1-zu-1-Zuordnung zwischen den Sensoreinheiten ausgebildet sind.

Zusätzlich oder alternativ können zur Steigerung der Empfindlichkeit eine Empfangsspule und insbesondere alle Empfangsspulen der ersten Sensoreinheit und/oder der zweiten Sensoreinheit jeweils mit einem Kern ausgebildet sein.

Mehrere oder alle der Kerne der Empfangsspulen können magnetisch miteinander gekoppelt und/oder verbunden sein, z.B. (a) über einen gemeinsamen magnetischen, magnetisierbaren und/oder ferromagnetischen Materialbereich, (b) über eine gemeinsame materialeinstückige Ausgestaltung einer koppelnden magnetischen Brücke und/oder der Kerne und/oder (c) zusammen mit einem Kern des Erregers oder einer Erregerspule der Erregereinheit.

Im Falle einer Zuordnung ein oder mehrerer Empfangsspulen einer Sensoreinheit zu einer oder mehreren Empfangsspulen der anderen Sensoreinheit bieten sich isoliert oder in beliebiger Kombination miteinander folgende Anordnungsmöglichkeiten.

So ist es denkbar, dass eine Empfangsspule der ersten Sensoreinheit und eine zugeordnete Empfangsspule der zweiten Sensoreinheit
- koaxial zueinander,
- konzentrisch zueinander,
- elektrisch voneinander getrennt,
- magnetisch miteinander gekoppelt,
- in unmittelbarer räumlicher Nachbarschaft zueinander,
- einander mit Windungen räumlich durchdringend oder kämmend und/oder
- mit einem gemeinsamen durchdringenden Kern
ausgebildet sind.

Durch eine entsprechende Kombination dieser Eigenschaften können im Hinblick auf einen jeweiligen Anwendungsfall die Erfassung und Kompensation von Störsignalen in geeigneter Weise angepasst werden.

Grundsätzlich stellt sich der erfindungsgemäße Vorteil der Störsignalkompensation auf der "magnetischen Ebene" bereits dann ein, wenn nur eine unterschiedliche elektrische Verschaltung der Mehrzahl der Empfangsspulen der beiden Sensoreinheiten gewählt wird.

Dabei ist es von besonderem Vorteil, wenn die Empfangsspulen mindestens einer Sensoreinheit
- nach Art einer Brückenschaltung,
- in Form einer Wheatstoneschen Brücke,
- in Form einer Induktivitätsresonanzmessbrücke,
- nach Art einer - insbesondere parallel geschalteten - Serienschaltung oder Serienverbindung,
- mit einem zu einer jeweiligen Empfangsspule in Reihe geschalteten Abstimmwiderstand und/oder
- mit einem zu einer jeweiligen Empfangsspule parallel geschalteten Abstimmkondensator
verschaltet sind.

Bei einer besonders vorteilhaften Ausgestaltungsform der erfindungsgemäßen Drehmomenterfassungseinrichtung ist die erste Sensoreinheit zur eigentlichen Messung des für die Drehmomenterfassung relevanten Signals ausgebildet und fungiert somit als Messsensor, indem nämlich ihre Empfangsspulen als Mess- und/oder Sensierungsspulen ausgebildet sind, wogegen die zweite Sensoreinheit als Kompensationssensor fungiert, indem nämlich ihre Empfangsspulen als Kompensationsspulen eingerichtet sind. Bei einer derartigen Aufteilung von Struktur und Funktion ist es von besonderem Vorteil, wenn der Messsensor mit seinen mehreren Empfangsspulen nach Art einer Wheatstoneschen Brücke verschaltet ist, wogegen der Kompensationssensor nach Art einer Serienverbindung oder Serienverschaltung angelegt ist.

Ein besonders hohes Maß an Reproduzierbarkeit, Empfindlichkeit und Genauigkeit stellt sich dann ein, wenn eine jeweilige Sensoreinheit in Bezug auf die zu untersuchende Welle und deren Drehachse ein hohes Maß an Symmetrie besitzt.

Ein besonders hohes Maß an Störsignalkompensation lässt sich erreichen, wenn gemäß einer anderen bevorzugten Fortbildung der vorliegenden Erfindung die Empfangsspulen einer Sensoreinheit, insbesondere mit ihren Spulenachsen, an Endpunkten oder im Bereich von Endpunkten eines Kreuzes angeordnet sind.

Das Kreuz kann als ebenes Kreuz ausgebildet sein, so dass die Anordnung der Spulen in einer Ebene erfolgt.

Es sind verschiedene Alternativen für die Ausgestaltung des Kreuzes denkbar, zum Beispiel nach Art eines senkrechten Kreuzes, eines Kreuzes mit gleich langen Seiten und/oder mit dem Erreger an einer Position im Bereich des Kreuzungspunktes.

Zusätzlich oder alternativ ist es denkbar, dass die erfindungsgemäße Drehmomenterfassungseinrichtung eingerichtet ist, im montierten Zustand und/oder im Betrieb mit ihrem seinem Kreuz derart parallel und beabstandet zur Rotationsachse der Welle oder zu einer die Rotationsachse der Welle enthaltenen Ebene ausgerichtet zu sein, dass in Draufsicht auf das Kreuz oder auf die Ebene des Kreuzes die Seiten des Kreuzes mit der Rotationsachse oder der Projektion der Rotationsachse auf die Ebene des Kreuzes einen Winkel mit demselben Wert, insbesondere von 45°, einschließen und/oder dass der Kreuzungspunkt auf der Rotationsachse oder der Projektion der Rotationsachse auf oder in der Ebene des Kreuzes liegt.

Die Messgenauigkeit lässt sich bei der Drehmomenterfassungseinrichtung steigern, indem gemäß einer vorteilhaften Weiterbildung die Empfangsspulen mit zu einer jeweiligen Empfangsspule in Reihe geschaltetem Abstimmwiderstand und/oder parallel geschaltetem Abstimmkondensator ausgebildet sind.

Dabei können die Elemente zum Abstimmen, nämlich ein jeweiliger Abstimmwiderstand und/oder ein jeweiliger Abstimmkondensator so gewählt werden, indem sie zum Beispiel variierbar ausgebildet werden, dass ein erfasster Messwert in einer bestimmten Situation, zum Beispiel in einem an sich lastfreien Zustand ohne von außen einwirkendes Drehmoment, als ein verschwindendes Detektionssignal vorliegt.

Einerseits können die Sensoreinheiten aufeinander abgestimmt und auch unabhängig voneinander gewartet werden, wenn gemäß einer weiteren Alternative der erfindungsgemäßen Drehmomenterfassungseinrichtung die Sensoreinheiten räumlich und/oder baulich separiert oder separat ausgebildet sind oder werden.

Es lassen sich jedoch besonders kompakte Bauformen mit einem gesteigerten Maß an reproduzierbaren Ergebnissen erreichen, wenn gemäß einer anderen vorteilhaften Weiterbildung der erfindungsgemäßen Drehmomenterfassungseinrichtung die Sensoreinheiten miteinander integriert, überlappend, verschränkt und/oder in einer gemeinsamen baulichen Einheit ausgebildet sind oder werden.

Dabei kann es insbesondere vorgesehen sein, dass die jeweiligen Sensoreinheiten mit einer konzentrischen Anordnung ihrer gegebenenfalls vorgesehenen Kreuzungspunkte angeordnet sind, wobei insbesondere im Bereich des gemeinsamen Kreuzungspunktes oder der überlappenden Kreuzungspunkte auch ein gemeinsamer Erreger ausgebildet ist.

Es ist denkbar, dass die Komponenten der Sensoreinheiten sowie der Erregereinheit als diskrete Bauteile ausbildet sind oder werden, zum Beispiel in Form gewickelter Spulen oder dergleichen.

Ein besonders hohes Maß an Kompaktheit lässt sich jedoch mit einer anderen vorteilhaften Weiterbildung der erfindungsgemäßen Drehmomenterfassungseinrichtung dadurch erreichen, dass eine jeweilige Sensoreinheit, insbesondere eine jeweilige Empfangsspule, und/oder ein jeweiliger Erreger, insbesondere eine jeweilige Magnetspule, zumindest teilweise als eine oder mit einer Struktur einer Platine oder Leiterplatte oder einer Mehrzahl von Platinen oder Leiterplatten ausgebildet ist oder wird.

Etwaige Kerne einer jeweiligen Sensoreinheit, einer jeweiligen Empfangsspule, eines jeweiligen Erregers und/oder einer jeweiligen Magnetspule können an einem der zu Grunde liegenden Welle zugeordneten und/oder zugewandten Ende an einer Endfläche oder Seite planar, konvex, rund, konisch, kegelförmig, kegelstumpfförmig, mit einer Spitze, lokal der Oberflächenform der Welle (15) angepasst, konkav nach Art eines Abschnitts oder Ausschnitts des Innenmantels eines Kreiszylinders und/oder konform zu einem Außenmantel der Welle ausgebildet sein oder werden.

Um die von den Sensoreinheiten bereitgestellten Werte und Signale in sinnvoller Art und Weise nutzen zu können, ist bei einer Weiterbildung der erfindungsgemäßen Drehmomenterfassungseinrichtung diese mit einer Auswerte- und Steuereinheit ausgebildet, welche eingerichtet ist, von den Sensoreinheiten ausgegebene für die erfassten Magnetfelder repräsentative Werte zu empfangen und auf der Grundlage der empfangenen Werte den Wert eines auf die Welle wirkenden Drehmomentes zu bestimmen.

Im Hinblick auf die Steigerung der Bewertungsgenauigkeit kann es dabei vorgesehen sein, dass die Auswerte- und Steuereinheit eingerichtet ist, eine gewichtete Differenz der von der ersten Sensoreinheit empfangenen Werte zu den von der zweiten Sensoreinheit empfangenen Werten zu Grunde zu legen.

Ein Kernaspekt der vorliegenden Erfindung fußt also unter anderem auf dem Umstand, dass durch ein extern auf eine Welle aufgebrachtes Drehmoment der mechanische Zustand der Welle im Sinne der Verteilung mechanischer Spannungen im Volumen und an der Oberfläche der Welle derart geändert wird, dass dies nach außen hin durch eine sich ändernde Wechselwirkung auf ein von außen aktiv eingestrahltes und sich zeitlich änderndes magnetisches Feld detektierbar ist. Dabei kommen insbesondere Oberflächen- und/oder Oberflächentorsionswellen, die durch die Drehmomentbelastung in der Welle erzeugt werden, zum Tragen.

Ferner betrifft die vorliegende Erfindung im Sinne einer Anwendung auch eine mit Muskelkraft und/oder oder mit Motorkraft antreibbare Arbeitsvorrichtung, insbesondere ein Fahrzeug, ein Fahrrad, Elektrofahrrad, eBike, Pedelec oder dergleichen, mit mindestens einem Rad, einem Antrieb zum Antreiben des mindestens einen Rades und einer erfindungsgemäßen Drehmomenterfassungseinrichtung zur Erfassung eines auf eine Welle des Antriebes wirkenden Drehmomentes, bei welchem auf der Grundlage des erfassten Drehmomentes der Antrieb überwachbar und/oder steuerbar ist.

### Kurzbeschreibung der Figuren

Unter Bezugnahme auf die beigefügten Figuren werden Ausführungsformen der Erfindung im Detail beschrieben.
- Figuren 1 bis 4: zeigen in schematischen Ansichten von verschiedenen Seiten eine Ausführungsform der erfindungsgemäßen Drehmomenterfassungseinrichtung mit räumlich integrierten Sensoreinheiten, bei welchen die Empfangsspulen in einer 1-zu-1-Zuordnung zwischen den Sensoreinheiten einander zugeordnet und auf einer gemeinsamen Achse und in räumlicher Nähe zueinander angeordnet sind.
- Figuren 5 bis 8c: zeigen in schematischer Form Schaltdiagramme des Aufbaus erster und zweiter Sensoreinheiten, die bei einer Ausführungsform der erfindungsgemäßen Drehmomenterfassungseinrichtung eingesetzt werden können.
- Figur 9: zeigt nach Art eines Blockdiagramms das bei einer Ausführungsform der erfindungsgemäßen Drehmomenterfassungseinrichtung zu Grunde liegende Auswerteschema.
- Figur 10: zeigt in schematischer Seitenansicht eine Ausführungsform einer erfindungsgemäßen Arbeitsvorrichtung nach Art eines Elektrofahrrads unter Verwendung einer Ausführungsform der erfindungsgemäßen Drehmomenterfassungseinrichtung.

### Bevorzugte Ausführungsformen der Erfindung

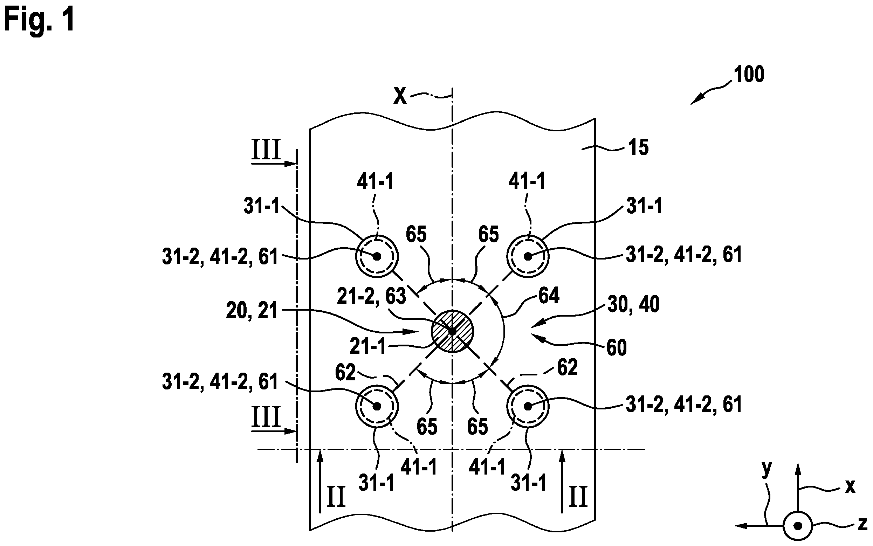

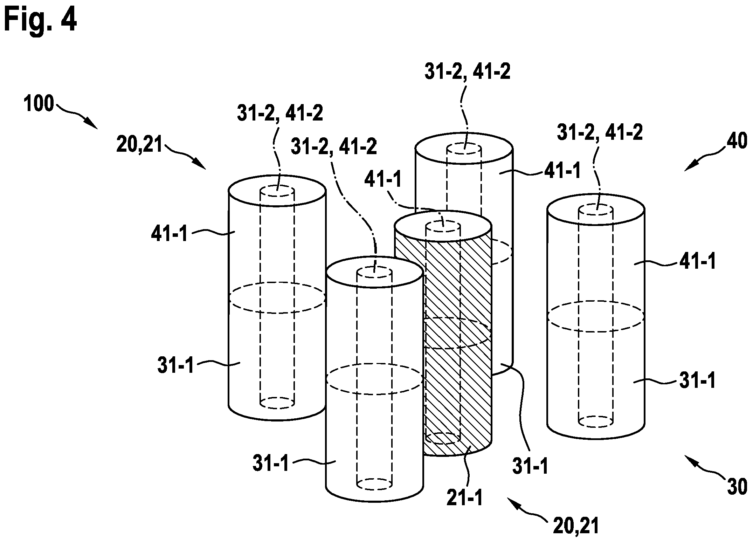

Nachfolgend werden unter Bezugnahme auf die Figuren 1 bis 10 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form von einander isoliert und beliebig miteinander kombiniert werden, ohne den Kern der Erfindung zu verlassen.

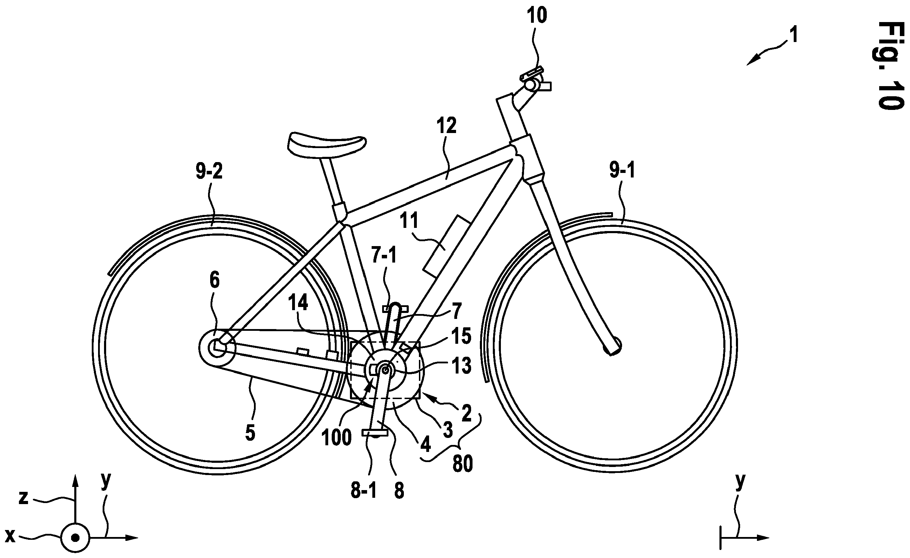

Zunächst wird unter Bezugnahme auf Figur 10 beispielhaft ein Elektrofahrrad als eine bevorzugte Ausführungsform der erfindungsgemäßen Arbeitsvorrichtung oder des erfindungsgemäßen Fahrzeuges 1 im Detail beschrieben. Grundsätzlich sind jedoch sämtliche Arbeitsvorrichtungen zur Realisierung der vorliegenden Erfindung denkbar, bei welchen eine Welle oder Koppelwelle 15 mit einem Drehmoment beaufschlagt wird und zur Steuerung des Betriebs oder zur Erfassung des Betriebszustands das Drehmoment erfasst werden soll.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist ein Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem elektrischen Antrieb 3 verbunden ist. Im oder am Rahmen 12 ist ferner Batterie 11 ausgebildet, welche zur Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

Der Antrieb 80 des erfindungsgemäßen Fahrzeugs 1 umfasst insgesamt also den Kurbeltrieb 2 zur Betätigung durch den Fahrer mittels Muskelkraft und den zusätzlichen oder alternativen elektrischen Antrieb 3.

Im Bereich des Antriebes 80 ist auch eine Ausführungsform der erfindungsgemäßen Drehmomenterfassungseinrichtung 100 ausgebildet, um die Belastung durch ein Drehmoment auf die Kurbelwelle 15 zu detektieren.

Anhand des in Figur 10 dargestellten Dreibeines wird deutlich, dass das Fahrzeug 1 sich mit seiner Längserstreckungsrichtung Y parallel zur y-Richtung erstreckt, wogegen die Quererstreckungsrichtung parallel zur x-Richtung verläuft und mit der Richtung der Achse X der Kurbelwelle 15 übereinstimmt.

Die Figuren 1 bis 4 zeigen verschiedene Ansichten einer Ausführungsform der erfindungsgemäßen Drehmomenterfassungseinrichtung 100.

Die Grundstruktur der Drehmomenterfassungseinrichtung 100 ist am besten aus der Draufsicht gemäß Figur 1 erkennbar. Dort ist die Kurbelwelle 15 als mit einem Drehmoment beaufschlagbare Welle, die es zu überwachen gilt, dargestellt. Die Kurbelwelle 15 ist in der x-Richtung ausgerichtet und um eine Achse X, welche parallel zur x-Richtung ausgerichtet ist, drehbar gelagert, wie dies auch im Zusammenhang mit Figur 10 für das erfindungsgemäße Fahrzeug 1 dargestellt ist.

Die in Figur 1 dargestellte Ausführungsform der erfindungsgemäßen Drehmomenterfassungseinrichtung 100 besteht aus einer ersten Sensoreinheit 30 und einer zweiten Sensoreinheit 40.

Die erste Sensoreinheit 30 dient als Messsensoreinrichtung oder kurz als Messsensor und weist vier Empfangsspulen 31-1 auf, die an den Endpunkten 61 eines senkrechten, ebenen und mit gleich langen Seiten 62 versehenen Kreuzes 60 angeordnet sind. Im Zentrum des Kreuzes 60, also dem Kreuzungspunkt 63, befindet sich ein Erreger 21 in Form einer Magnetspule 21-1 mit Kern 21-2 als Teil einer Erregereinheit 20.

Die erste Sensoreinheit 30 als Messsensoreinrichtung ist mit ihrem Ausrichtungskreuz 60 so orientiert, dass die Drehachse X in Projektion einen Winkel 65 von 45 Grad mit den Seiten 62 des Ausrichtungskreuzes 60 der ersten Sensoreinheit 30 einschließt. Auf diese Art und Weise kann das von der Welle 15 durch Erregung mittels der Erregereinheit 20 erregte und getragene Magnetfeld besonders genau erfasst werden.

Zusätzlich zur ersten Sensoreinheit 30 ist eine zweite Sensoreinheit 40 vom gleichen Aufbau wie der ersten Sensoreinheit 30 aber mit anderer elektrischer Verschaltung deckungsgleich zur ersten Sensoreinheit 30 und räumlich leicht oder gering über dieser beabstandet ausgebildet.

Deckungsgleich bedeutet in diesem Zusammenhang, dass beide Sensoreinheiten 30, 40 dieselbe Anzahl, nämlich vier, Empfangsspulen 31-1, 41-1 aufweisen, die in einer 1-zu-1-Zuordnung einander zugeordnet sind, wobei einander zugeordnete Empfangsspulen 31-1, 41-1 - bei dieser Ausführungsform - koaxial und in unmittelbarer räumlicher Nähe oder Nachbarschaft zueinander angeordnet sind, so dass sich also die Endpunkte 61, die Seiten 62 und auch die Kreuzungspunkte 63 der jeweiligen Kreuze 60 decken, wobei die Kreuzungspunkte 63 in Projektion auf der Drehachse X liegen.

Die erste Sensoreinheit 30 und die zweite Sensoreinheit 40 als Figur 1 sind also in Bezug aufeinander und in Bezug auf die Welle 15 gleich orientiert angeordnet, jedoch in unterschiedlicher Weise in Bezug auf ihre Empfangsspulen 31-1, 41-1 unterschiedlich elektrisch verschaltet.

Die beiden Sensoreinheiten 30 und 40 werden im Betrieb von einer gemeinsamen Erregereinheit 20 mit Erreger 21 in Form einer Magnetspule 21-1 und einem von der Magnetspule 21-1 umschlossenen Kern 71-2 - auch vermittelt durch das von der Kurbelwelle 15 abgestrahlte Feld - angeregt. Der Erreger 21 ist am, im oder im Bereich des Kreuzungspunkts 63 angeordnet, so dass sich insgesamt eine symmetrische Anordnung aus Erregereinheit 20 und Sensoreinheiten 30, 40 ergibt.

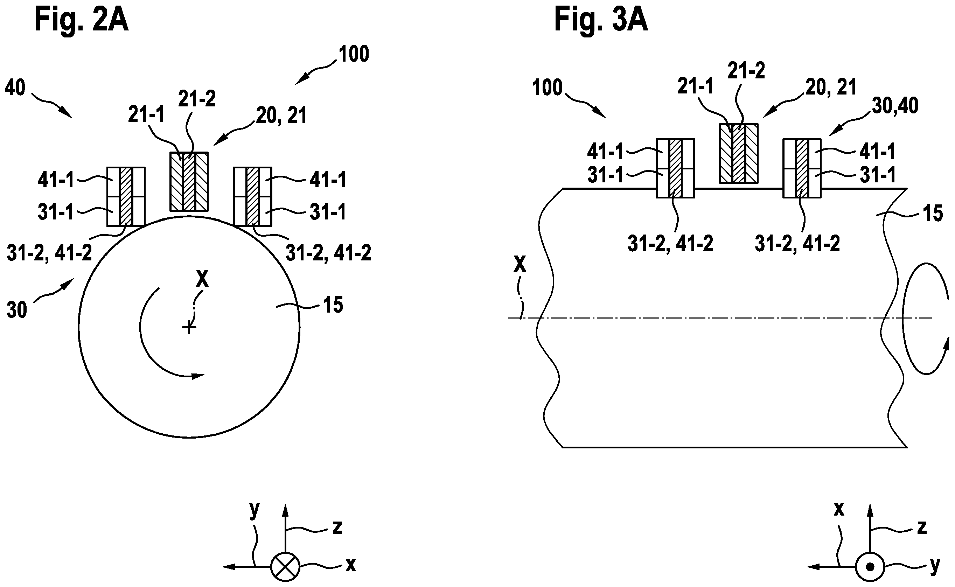

Die Figuren 2A und 3A zeigen entlang der Schnittebenen II-II bzw. III-III geschnittene Seitenansichten der Anordnung der erfindungsgemäßen Drehmomenterfassungseinrichtung 100 aus Figur 1.

Aus diesen Darstellungen wird klar, dass die Empfangsspulen 31-1, 41-1, die einander zugeordnet sind, einen gemeinsamen Kern 31-2, 41-2 aufweisen und dass die jeweiligen Empfangsspulen 41-1 der als Kompensationssensor fungierenden zweiten Sensoreinheit 40 immer unmittelbar über einer jeweils zugeordneten Empfangsspulen 31-1 der als Messsensor fungierenden ersten Sensoreinheit 30 angeordnet sind.

Auf diese Weise misst die erste Sensoreinheit 30 das von der Welle 15 getragene Magnetfeld mit einem besonders hohen Maß an Empfindlichkeit inklusive der Störsignale, wogegen diese kombinierte Signale in der gleichen Art und Weise empfängt, jedoch aufgrund der unterschiedlichen elektrischen Sparschaltung die Störsignalanteile kompensiert.

Zusätzlich ermöglicht diese Vorgehensweise besonders vorteilhaft eine Differenzbildung der durch die ersten und zweiten Sensoreinheiten 30 und 40 ausgegebenen Signale, gegebenenfalls in gewichteter und/oder nachbearbeiteter Form, um so die Störeinflüsse herausfiltern und den durch das beaufschlagende Drehmoment erzeugten Effekt auf das getragene Magnetfeld besonders genau detektieren zu können, und zwar mit dem Ziel, das wirkende Drehmoment in seinem Wert möglichst genau und störungsfrei zu bestimmen.

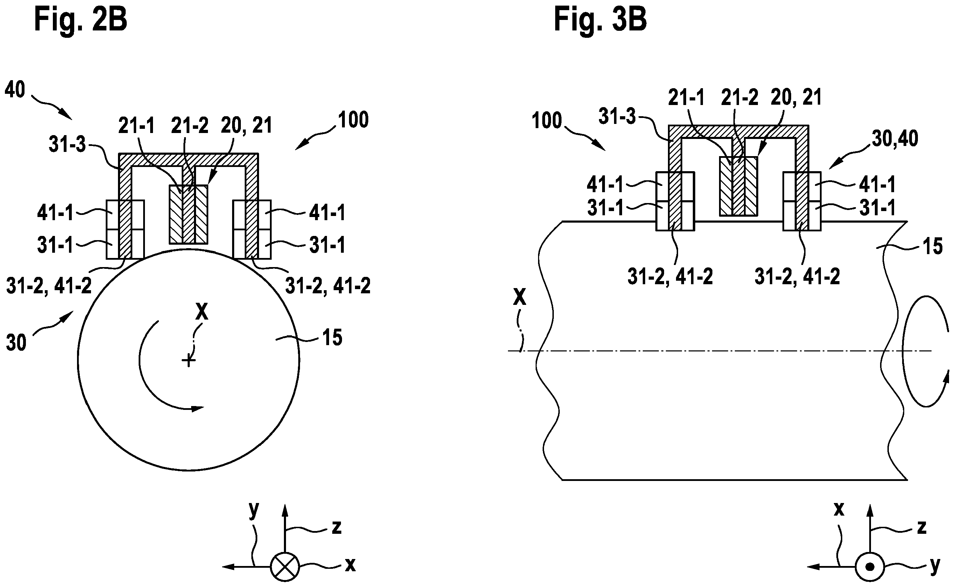

Die Figuren 2B und 3B zeigen zu den Darstellungen der Figuren 2A und 3A analoge Anordnungen der erfindungsgemäßen Drehmomenterfassungseinrichtung 100, wobei jedoch bei diesen Anordnungen für ein besonders hohes Maß an magnetischer Kopplung die gemeinsamen Kerne 31-2, 41-2 nach Art einer magnetischen Brücke 31-3 miteinander magnetisch gekoppelt und/oder verbunden sind. Insbesondere kann es vorgesehen sein, dass die Kerne 31-2, 41-2 zusammen mit der magnetischen Brücke 31-3 einen materialeinstückigen Bereich eines magnetischen oder ferromagnetischen Materials bilden.

Bei einer anderen bevorzugten Ausgestaltungsform kann auch der Kern 21-2 des Erregers 21 oder seiner Magnetspule 21-1 über die magnetische Brücke 31-3 gekoppelt sein, insbesondere in materialeinstückiger Weise.

Die unterschiedliche elektrische Verschaltung der Empfangsspulen 31-1, 41-1 der Sensoreinheiten 30 und 40 soll vorteilhafterweise so ausgebildet sein, dass z.B. die zweite Sensoreinheit 40 die Störeinflüsse in besonders hohem Maß kompensiert.

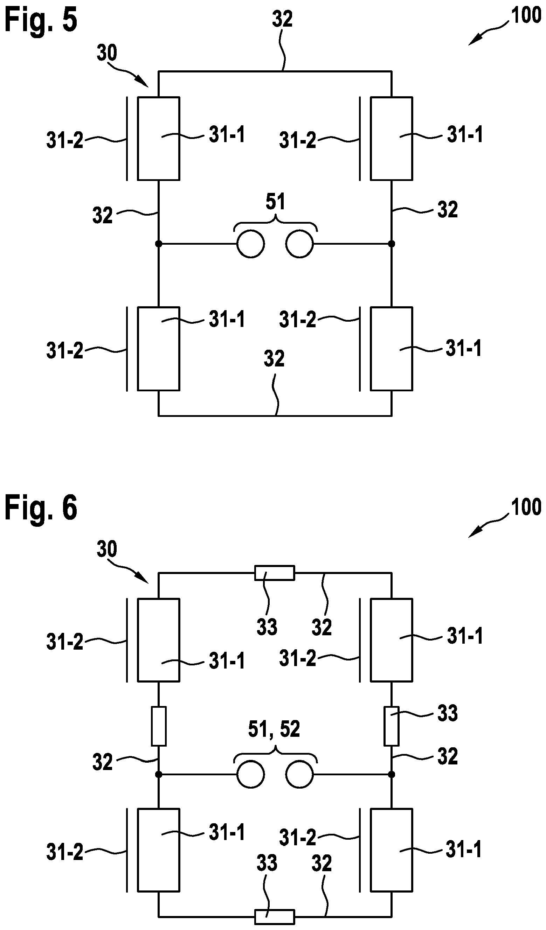

Dies kann unter anderem durch Schaltungsanordnungen erreicht werden, wie sie im Zusammenhang mit den Figuren 5 bis 8 erläutert werden. Diese zeigen in schematischer Form Schaltdiagramme des Aufbaus erster und zweiter Sensoreinheiten 30, 40, die bei einer Ausführungsform der erfindungsgemäßen Drehmomenterfassungseinrichtung 100 eingesetzt werden können.

Figur 5 zeigt nach Art eines Ersatzschaltbildes den grundsätzlichen Aufbau der ersten Sensoreinheit 30 einer Ausführungsform der erfindungsgemäßen Drehmomenterfassungseinrichtung 100.

Dabei sind jeweils die Empfangsspulen 31-1 mit einem jeweiligen Spulenkern 31-2 über Leitungen 32 nach Art einer Wheatstoneschen Brücke oder einer Induktivitätsresonanzmessbrücke entsprechend verbunden, wobei über Anschlüsse 51 ein entsprechender elektrischer Abgriff ermöglicht wird.

Bei der Ausführungsform gemäß Figur 6 sind die jeweiligen Empfangsspulen 31-1 ebenfalls mit Magnetkern 31-2 miteinander über Leitungen 32, 42 nach Art einer Wheatstoneschen Brücke oder einer Induktionsresonanzmessbrücke verschaltet, wobei jedoch zwischen je zwei Empfangsspulen 31-1 Abstimmwiderstände 43 in Reihe geschaltet sind. Die Abstimmwiderstände 43 können auch variabel ausgebildet sein. Der Abgriff nach außen erfolgt über Anschlüsse 51.

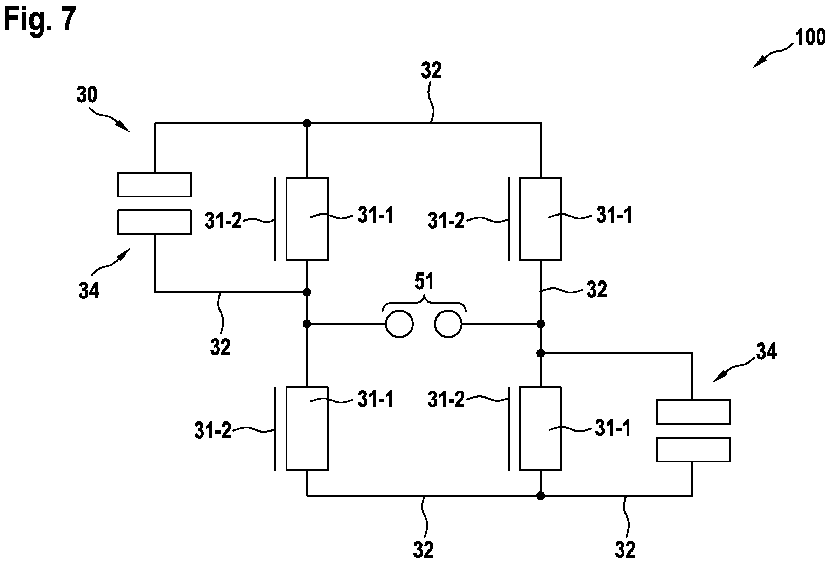

Bei der Ausführungsform gemäß Figur 7 sind einige der Empfangsspulen 31-1 der ersten Sensoreinheit 30 jeweils mit einem Abstimmkondensator 34 in Parallelschaltung zur jeweiligen Empfangsspule 31-1 ausgebildet. Diese Abstimmkondensatoren 34 können als einstellbare oder variable Kondensatoren ausgebildet sein.

Bei den Anordnungen gemäß den Figuren 5 bis 7 können bei der ersten Sensoreinheit 30 auch Abstimmkondensatoren 34 und Abstimmwiderstände 33 miteinander kombiniert werden.

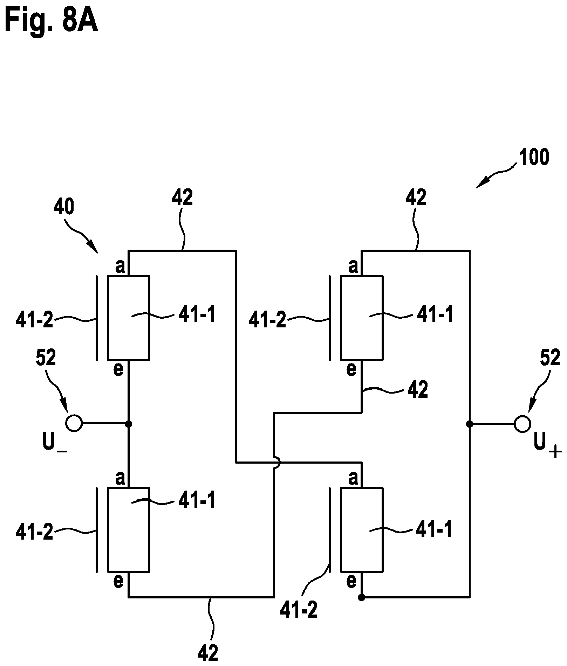

Figur 8a zeigt nach Art eines Ersatzschaltbildes den grundsätzlichen Aufbau der zweiten Sensoreinheit 40 einer Ausführungsform der erfindungsgemäßen Drehmomenterfassungseinrichtung 100.

Dabei sind jeweils die Empfangsspulen 41-1 mit einem jeweiligen Spulenkern 41-2 über Leitungen 42 nach Art einer Serienverschaltung oder entsprechend verbunden, wobei über Anschlüsse 52 ein entsprechender elektrischer Abgriff ermöglicht wird.

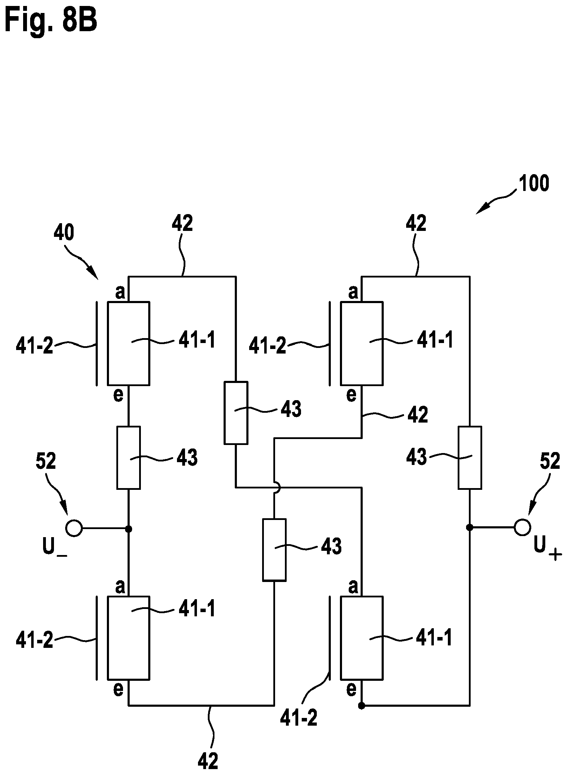

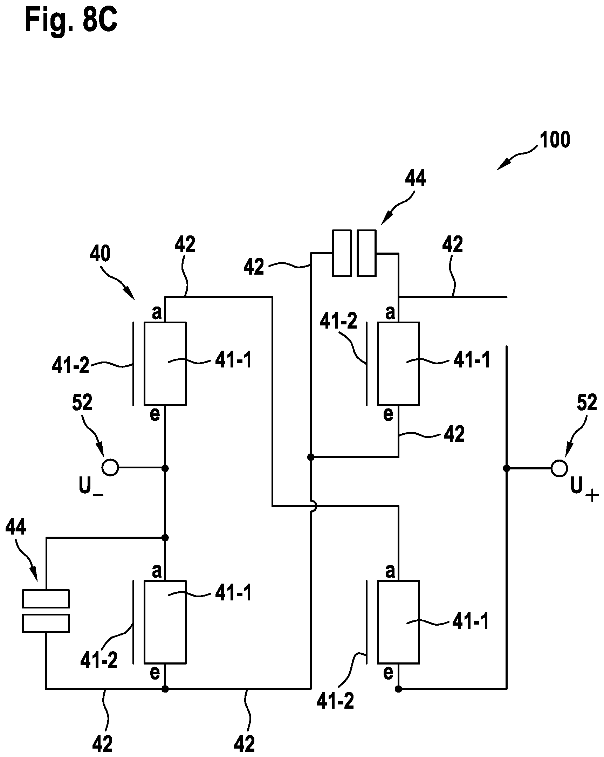

Analog zu den Figuren 6 und 7 der ersten Sensoreinheit 30 mit Abstimmwiderständen 33 bzw. Abstimmkondensatoren 34 zeigen die Figuren 8B und 8C die zweite Sensoreinheit 40 mit in Serie geschalteten Abstimmwiderständen 43 bzw. mit jeweils parallel geschalteten Abstimmkondensatoren 44.

Um ein optimales Ergebnis beim Abstimmen der ersten Sensoreinheit 30 und/oder der zweiten Sensoreinheit 40 zu erzielen, können beliebige Zweige der jeweilige verschalteten Empfangsspulen 31-1, 41-1 einzeln, isoliert oder in beliebiger Kombination miteinander mit Abstimmwiderständen 33, 43 und/oder mit Abstimmkondensatoren 34, 44 ausgebildet sein oder werden.

Wie bei den in den Figuren 5 bis 7 gezeigten Anordnungen für die erste Sensoreinheit 30, so können - auch in Abhängigkeit von der jeweiligen Anwendung - bei der zweiten Sensoreinheit 40 ebenfalls Widerstände und/oder Kondensatoren zur Abstimmung ausgebildet sein.

Diese sind hier nicht explizit dargestellt, es bietet sich jedoch eine zu den Figuren 5 bis 7 analoge Anordnung an.

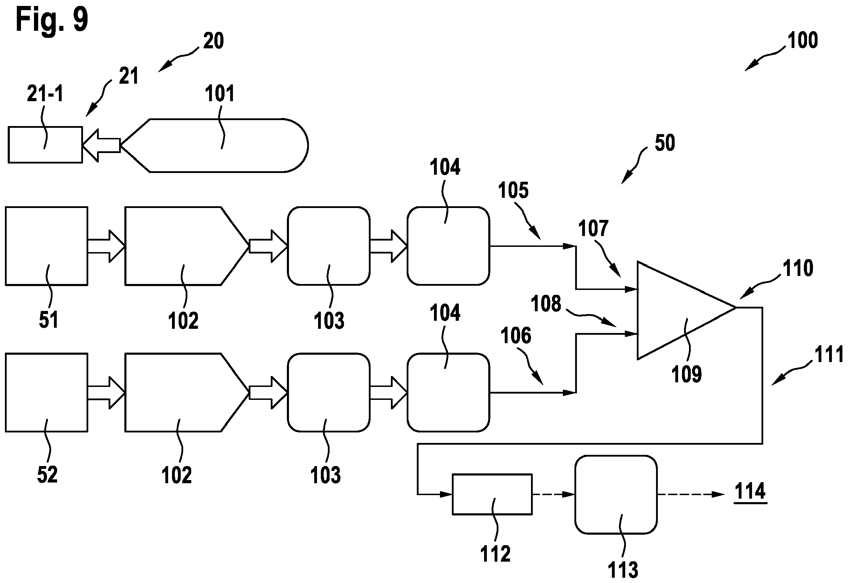

Figur 9 zeigt nach Art eines schematischen Blockdiagramms verschiedene Komponenten und Ablaufelemente, die bei einer Ausführungsform der erfindungsgemäßen Drehmomenterfassungseinrichtung 100 im Zusammenhang mit einer Auswerte- und Steuereinheit 50 zusammenspielen können.

Ausgangspunkt ist ein Oszillator und Generator 101, über welchen eine zeitlich veränderliche Spannung erzeugt wird, zum Beispiel eine sinusförmige Wechselspannung mit einer Frequenz von etwa 500 Hz bis etwa 5 kHz, die dann in die Magnetspule 21-1 des für die Sensoreinheiten 30 und 40 gemeinsamen Erregers 21 der Erregereinheit 20 zur Erzeugung eines magnetischen Wechselfeldes eingespeist wird.

Das magnetische Wechselfeld des Erregers 21 wird der Kurbelwelle 15 aufgeprägt und von den ersten und zweiten Sensoreinheiten 30, 40 in der oben bereits beschriebenen Form detektiert. Über die Anschlüsse 51 und 52 werden die von den ersten und zweiten Sensoreinheiten 30, 40 erzeugten Signale bereitgestellt und von der Auswerte- und Steuereinheit 50 empfangen.

Die über die Anschlüsse 51, 52 empfangenen Signale werden zunächst an eine Eingangsverstärkerstufe 102 weitergeleitet und verstärkt. Nach dem Durchlaufen eines Bandpassfilters 103 mit einer Zentralfrequenz bei etwa 500 Hz bis etwa 5 kHz und einer RMS-Berechnung 104 werden die dann erhaltenen RMS-Werte 105, 106 der ersten Sensoreinheit 30 als Messsensor und der zweiten Sensoreinheit 40 als Kompensationssensor einer Differenz-, Anpassungs- und/oder Skalierungseinheit bzw. insbesondere den zueinander inversen Eingängen 107 und 108 eines Operationsverstärkers 109 zugeführt. Durch diese Art der Verschaltung wirkt der Operationsverstärker 109 als Differenzverstärker und gibt an seinem Ausgang 110 den analogen RMS-Wert eines von Störungen kompensierten Drehmomentsignals 111 aus. Dieses wird einem Analog-Digitalwandler 112 zugeführt. Das Ausgangssignal des Analog-Digitalwandlers 112 wird dann einer digitalen Filterung und Weiterverarbeitung 113 unterworfen. Im Endergebnis wird ein digitaler RMS-Wert des von Störsignalen kompensierten Drehmomentsignals 114 erhalten.

Diese und weitere Merkmale und Eigenschaften der vorliegenden Erfindung werden an Hand der folgenden Darlegungen weiter erläutert:
Ein Aspekt der vorliegenden Erfindung besteht in der Entwicklung eines aktiven Sensors zur Drehmomentmessung an einer stehenden oder sich drehenden Welle. Beispiele für derartige drehende Wellen sind die Kurbelwellen von Fahrrädern, Elektrofahrrädern, eBikes, Pedelecs oder dergleichen.

Mit der Erfindung soll insbesondere eine Verbesserung im Hinblick auf die Störanfälligkeit gegenüber externen Magnetfeldern, z.B. dem Erdfeld und/oder dem Umfeld, der Drehung der Welle, z.B. auf Grund der nicht idealen Geometrie der Welle 15, Vibrationen, Temperaturänderungen und dergleichen erreicht werden.

Eine Kernidee der vorliegenden Erfindung ist das Vorsehen eines zweiten Messelementes, und zwar im Sinne einer zweiten Sensoreinheit 40, die als Kompensationssensor fungiert, in dem sie bei ansonsten identischem Aufbau wie die erste Sensoreinheit in Bezug auf die Empfangsspulen eine im Vergleich zur ersten Sensoreinheit abweichende elektrische Verschaltung aufweist. Der Kompensationssensor kann somit als Messelement aus mehreren miteinander verschaltenden Empfangsspulen zur Messung und zur Kompensation von Störungen dienen, wobei die Kompensation bereits auf der "magnetischen Ebene" erfolgt, also bei der Signalentstehung, insbesondere in der ersten Sensoreinheit, welche als Messsensor fungiert.

Es erfolgt eine aktive magnetische Messung bei niedrigen Arbeitsfrequenzen, insbesondere im Bereich von weniger als 5 kHz, vorzugsweise im Bereich von weniger als 3 kHz.

Eine analoge und/oder digitale Signalverarbeitung dient der besseren Signalauflösung und der Steigerung des Signal-zu-Rausch-Verhältnisses. Auch ist dort zusätzlich eine Temperaturkompensation möglich.

Die ersten und zweiten Sensoreinheiten 30 und 40 können in diesem Zusammenhang auch als zwei unabhängige Sensorköpfe, einmal für die Detektion und einmal für die Kompensation, aufgefasst werden.

Im Zusammenhang mit den Figuren wurden Spulenkerne 21-2, 31-2 und 41-2 mit unterschiedlicher Geometrie an der der Welle 15 zugewandten Seite gezeigt. Diese Seite kann als Endfläche planar, konvex, rund, konisch und/oder lokal der Oberflächenform der Welle 15 angepasst sein, also z.B. konkav nach Art eines Abschnitts oder Ausschnitts des Innenmantels eines Kreiszylinders und konform zum Außenmantel der Welle 15.

Bei einer bevorzugten Ausführungsform der erfindungsgemäßen Drehmomenterfassungseinrichtung 100 können vorgesehen sein:
- eine Erregerspule in der Mitte,
- vier Sensierungsspulen 31-1 für die erste Sensoreinheit 30, welche in einem Winkel von 45° von der Wellenachse X gedreht oder verschwenkt angeordnet sind,
- eine elektrische Verschaltung der ersten Sensoreinheit 30 nach Art einer Wheatstoneschen Brücke verschaltet, zum Beispiel gemäß Figur 5, sowie
- vier elektromagnetische Kompensationspulen in Form von Empfangsspulen 41-1 für die zweite Sensoreinheit 40, welche räumlich über den Sensierungsspulen 31-1 und jeweils über demselben Kern 31-2 wie die Sensierungsspulen 31-1 angeordnet, insbesondere in einer Serie-Verbindung.
- Es kann ein Kern aus einem ferromagnetischen Material ausgebildet sein, der alle Spulen 31-1 und/oder 41-1 miteinander verbindet.
- Die Sensierungsspulen 31-1 erfassen Signale vom Drehmoment und von den Störungen.
- Aufgrund der speziellen Verschaltung der Kompensationsspulen 41-1 nach Art einer Serie-Verbindung erfassen diese Störungen.
- Über die magnetische Kopplung zwischen den Sensierungsspulen 31-1 und den Kompensationsspulen 41-1 erfolgt eine Kompensation der Störungen bereits auf "magnetischer Ebene", nämlich über eine Gegeninduktion und/oder über den magnetisch vermittelnden und koppelnden gemeinsamen Kern 31-2, 41-2 der einander zugeordneten Spulen einen 31-1, 41-1.
- Es kann optional eine separate Drehzahlspule mit einer getrennten optionalen dazugehörigen Erregerspule in Achsenrichtung orientiert ausgebildet sein.
- Diese Drehzahlspule misst Schwankungen des Magnetfeldes mit Hilfe einer kodierten Oberfläche auf der Welle 15, zum Beispiel in Form einer kodierten Rändel, die auf der Welle 15 aufgebracht oder in dieser eingeprägt ist.
- Eine Miniaturisierung der Konstruktion kann weiter optimiert werden, so dass der Flächenbedarf, der für die Erfassung von Störgrößen notwendig ist, auf die gleiche Fläche zusammenfällt, die für die Sensierung des Drehmomentes benötigt wird.
- Außerdem ist durch das Zusammenbringen der Kompensationsspulen 41-1 und der Sensierungsspulen 31-1 auf einem gemeinsamen Kern 31-2, 41-2 die Anzahl der Kerne von 9 auf 5 reduziert. Das spart auch Fläche, Material und Kosten.
- Damit wird die Gesamtgröße des Sensors deutlich geringer und kann leicht in jede typische kleine Umgebung problemlos integriert werden.
- Die gesamte Elektronik benötigt ungefähr die gleiche Fläche wie die Sensier- und Kompensationsspulen 31-1, 41-1. Somit entsteht kein zusätzlicher Flächenbedarf.
- Da der gesamte Sensor in modernster Leiterplattentechnologie ausgebildet sein kann, liegen die Genauigkeit der Realisierung und somit geringe Fertigungstoleranzen genauso wie die Fertigungstoleranzen von LP mit dieser Fertigungstechnologie, also im Bereich von µm. Das macht einen Einsatz in einer Serienfertigung attraktiv.
- Optional ist ein Abschirmblech zur Reduktion von EMV-Störungen einsetzbar.

## Patentansprüche

1. Drehmomenterfassungseinrichtung (100) zur aktiven Erfassung eines auf eine Welle (15) und insbesondere auf eine Kurbelwelle (15) einer mit Muskelkraft und/oder oder mit Motorkraft antreibbaren Arbeitsvorrichtung, insbesondere eines Fahrzeugs (1), entlang einer Rotationsachse (X) wirkenden Drehmomentes,
mit:
- einer Erregereinheit (20), welche zur Beaufschlagung der Welle (15) mit einem zeitlich veränderlichen Magnetfeld ausgebildet ist, und
- einer ersten Sensoreinheit (30) und einer zweiten Sensoreinheit (40), welche zur Erfassung eines von der Welle (15) getragenen Magnetfeldes ausgebildet sind,
wobei die erste Sensoreinheit (30) und die zweite Sensoreinheit (40)
- jeweils mehrere Empfangsspulen (31-1, 41-1) aufweisen,
- in Bezug aufeinander mit ihren Empfangsspulen (31-1, 41-1) dieselbe Orientierung aufweisen, so dass sie im montierten Zustand und im Betrieb in Bezug auf die Welle (15) und/oder in Bezug auf die Rotationsachse (X) gleich orientiert sind und, insbesondere bei ansonsten gleichem Aufbau,
- unterschiedliche elektrische Verschaltungen für ihre jeweiligen mehreren Empfangsspulen (31-1, 41-1) aufweisen.

2. Drehmomenterfassungseinrichtung (100) nach Anspruch 1,
bei welcher die Erregereinheit (20) für die Sensoreinheiten (30, 40) einen gemeinsamen Erreger (21) aufweist, insbesondere aus oder mit einer Magnetspule (21-1), mit einem Kern (21-2), mit oder aus einem ferromagnetischen Material und/oder mit einer Position in der Mitte oder zentral zur Anordnung der mehreren Empfangsspulen (31-1, 41-1) der ersten Sensoreinheit (30) und/oder der zweiten Sensoreinheit (40).

3. Drehmomenterfassungseinrichtung (100) nach einem der vorangehenden Ansprüche, bei welcher
- Empfangsspulen (31-1) der ersten Sensoreinheit (30) als Mess- und/oder Sensierungsspulen und/oder
- Empfangsspulen (41-1) der zweiten Sensoreinheit (40) als Kompensationsspulen
ausgebildet sind.

4. Drehmomenterfassungseinrichtung (100) nach einem der vorangehenden Ansprüche, bei welcher
- die erste Sensoreinheit (30) und die zweite Sensoreinheit (40) mit derselben Anzahl von Empfangsspulen (31-1, 41-1) ausgebildet sind, insbesondere jeweils mit vier Empfangsspulen (31-1, 41-1) und/oder mit einer 1-zu-1-Zuordnung, und/oder
- eine Empfangsspule (31-1, 41-1) und insbesondere alle Empfangsspulen (31-1, 41-1) der ersten Sensoreinheit (30) und/oder der zweiten Sensoreinheit (40) jeweils mit einem Kern (31-2, 41-2), ausgebildet ist bzw. sind, wobei mehrere oder alle der Kerne (31-2, 41-2) der Empfangsspulen (31-1, 41-1) magnetisch miteinander gekoppelt und/oder verbunden sind (a) über einen gemeinsamen magnetischen, magnetisierbaren und/oder ferromagnetischen Materialbereich, (b) über eine gemeinsame materialeinstückige Ausgestaltung einer koppelnden magnetischen Brücke (31-3) und/oder der Kerne (31-2, 41-2) und/oder (c) zusammen mit einem Kern (21-2) des Erregers (21) oder einer Erregerspule (21-1).

5. Drehmomenterfassungseinrichtung (100) nach einem der vorangehenden Ansprüche, bei welcher eine Empfangsspule (31-1) der ersten Sensoreinheit (30) und eine zugeordnete Empfangsspule (41-1) der zweiten Sensoreinheit (40)
- koaxial zueinander,
- konzentrisch zueinander,
- elektrisch voneinander getrennt,
- magnetisch miteinander gekoppelt,
- in unmittelbarer räumlicher Nachbarschaft zueinander,
- einander mit Windungen räumlich durchdringend oder kämmend und/oder
- mit einem gemeinsamen durchdringenden Kern (31-2, 41-2)
ausgebildet sind.

6. Drehmomenterfassungseinrichtung (100) nach einem der vorangehenden Ansprüche, bei welcher die Empfangsspulen (31-1, 41-1) mindestens einer Sensoreinheit (30, 40)
- nach Art einer Brückenschaltung,
- in Form einer Wheatstoneschen Brücke,
- in Form einer Induktivitätsresonanzmessbrücke,
- nach Art einer - insbesondere parallel geschalteten - Serienschaltung oder Serienverbindung,
- mit einem zu einer jeweiligen Empfangsspule (31-1, 41-1) in Reihe geschalteten Abstimmwiderstand (33, 43) und/oder
- mit einem zu einer jeweiligen Empfangsspule (31-1, 41-1) parallel geschalteten Abstimmkondensator (34, 44)
verschaltet sind.

7. Drehmomenterfassungseinrichtung (100) nach einem der vorangehenden Ansprüche, bei welcher die Empfangsspulen (31-1, 41-1) einer Sensoreinheit (30, 40), insbesondere mit ihren Spulenachsen, an Endpunkten (61) oder im Bereich von Endpunkten (61) eines - insbesondere ebenen - Kreuzes (60) angeordnet sind, vorzugsweise eines senkrechten Kreuzes (60), eines Kreuzes (60) mit gleich langen Seiten (62) und/oder mit dem Erreger (21) im Bereich des Kreuzungspunktes (63).

8. Drehmomenterfassungseinrichtung (100) nach Anspruch 7, welche eingerichtet ist, im montierten Zustand und/oder im Betrieb mit seinem Kreuz (60) derart parallel und beabstandet zur Rotationsachse (X) der Welle (15) zu sein, dass in Draufsicht auf das Kreuz (60) die Seiten (62) des Kreuzes (60) mit der Rotationsachse (X) einen Winkel (65) mit demselben Wert, insbesondere von 45°, einschließen und/oder der Kreuzungspunkt (63) auf der Rotationsachse (X) liegt.

9. Drehmomenterfassungseinrichtung (100) nach einem der vorangehenden Ansprüche, bei welcher die Sensoreinheiten (30, 40)
- räumlich und/oder baulich separiert,
- miteinander integriert, überlappend, verschränkt und/oder in einer gemeinsamen baulichen Einheit,
- mit einer konzentrischen Anordnung ihrer Kreuzungspunkte (63) und/oder dem gemeinsamen Erreger (21)
ausgebildet sind.

10. Drehmomenterfassungseinrichtung (100) nach einem der vorangehenden Ansprüche, bei welcher
- eine jeweilige Sensoreinheit (30, 40), eine jeweilige Empfangsspule (31-1, 41-1), ein jeweiliger Erreger (21, 22) und/oder eine jeweilige Magnetspule (22-1, 22-2), zumindest teilweise als eine oder mit einer Struktur einer Platine (70) oder Leiterplatte oder einer Mehrzahl von Platinen (70) oder Leiterplatten ausgebildet ist und/oder
- etwaige Kerne (21-2, 31-2, 41-2) einer jeweiligen Sensoreinheit (30, 40), einer jeweiligen Empfangsspule (31-1, 41-1), eines jeweiligen Erregers (21, 22) und/oder einer jeweiligen Magnetspule (22-1, 22-2) an einem der Welle (15) zugeordneten und/oder zugewandten Ende an einer Endfläche planar, konvex, rund, konisch, kegelförmig, kegelstumpfförmig, mit einer Spitze, lokal der Oberflächenform der Welle (15) angepasst, konkav nach Art eines Abschnitts oder Ausschnitts des Innenmantels eines Kreiszylinders und/oder konform zu einem Außenmantel der Welle (15) ausgebildet sind.

11. Drehmomenterfassungseinrichtung (100) nach einem der vorangehenden Ansprüche, mit einer Auswerte- und Steuereinheit (50), welche eingerichtet ist,
- von den Sensoreinheiten (30, 40) ausgegebene für die erfassten Magnetfelder repräsentative Werte zu empfangen,
- auf der Grundlage der empfangenen Werte den Wert eines auf die Welle (15) wirkenden Drehmomentes zu bestimmen und insbesondere
- eine gewichtete Differenz der von der ersten Sensoreinheit (30) empfangenen Werte zu den von der zweiten Sensoreinheit (40) empfangenen Werten zu Grunde zu legen.

12. Mit Muskelkraft und/oder oder mit Motorkraft antreibbare Arbeitsvorrichtung, insbesondere Fahrzeug (1), Fahrrad, Elektrofahrrad, eBike und/oder Pedelec, mit:
- mindestens einem Rad (9-1, 9-2),
- einem Antrieb (80) zum Antreiben des mindestens einen Rades (9-1, 9-2) und
- einer Drehmomenterfassungseinrichtung (100) nach einem der Ansprüche 1 bis 11 zur Erfassung eines auf eine Welle (15) des Antriebes (80) wirkenden Drehmomentes,
bei welchem auf der Grundlage des erfassten Drehmomentes der Antrieb (80) überwachbar und/oder steuerbar ist.
